# EUROPEAN PATENT APPLICATION

(11) **EP 4 779 956 A1**
(43) Date of publication of application: **22.07.2026**
(21) Application number: 24865667.0
(22) Date of filing: 24.07.2024
(51) Int. Cl.: H04L 67/14, H04L 67/1021, H04L 43/0811, H04L 43/0817, H04W 48/02, H04L 43/16, H04L 67/101, H04L 69/28, H04L 43/0864, G06N 20/00

(54) **ELECTRONIC DEVICE AND METHOD FOR SELECTING NETWORK FUNCTION IN COMMUNICATION SYSTEM**

(30) Priority: 16.09.2023 KR 20230123538
(71) Applicant: Samsung Electronics Co., Ltd., Suwon-si, Gyeonggi-do 16677 (KR)
(72) Inventor: KIM, Bokkeun, Suwon-si Gyeonggi-do 16677 (KR); SON, Sangwoo, Suwon-si Gyeonggi-do 16677 (KR); KIM, Gyeongsik, Suwon-si Gyeonggi-do 16677 (KR); KIM, Cheolmin, Suwon-si Gyeonggi-do 16677 (KR); YOO, Kyungmi, Suwon-si Gyeonggi-do 16677 (KR); LEE, Heonhyung, Suwon-si Gyeonggi-do 16677 (KR); CHOI, Jaehyuk, Suwon-si Gyeonggi-do 16677 (KR)
(74) Representative: Gulde & Partner
(86) International application number: PCT/KR2024/010740
(87) International publication number: WO 2025/058224

(57) **Abstract**

Provided in embodiments is a management device for selecting a network function (NF). The management device may comprise: a memory configured to store instructions; at least one transceiver; and at least one processor. When executed by the at least one processor, the instructions can cause the management device to perform an NF selection procedure by: transmitting a request message to each of a plurality of NFs connected to the management device; receiving at least one response message from at least one of the plurality of NFs after transmitting the request message to each NF; obtaining connection state information of each NF on the basis of the request message transmitted to each NF and the at least one response message from the at least one NF; detecting a fault NF from among the plurality of NFs on the basis of the connection state information of each NF; and setting a restriction on a new call connection by using the fault NF.

## Description

### [Technical Field]

The present disclosure relates to a communication system. More specifically, the present disclosure relates to an electronic device and a method for selecting a network function (NF) in the communication system.

### [Background Art]

In order to support a communication system, a base station may be connected to a core network. A 5G core network is provided based on a service-based architecture (SBA) centered on network function (NF) services. Each NF may be selected by another NF, or may be registered in an NRF. For example, an NF may register services supported by the NF in a network repository function (NRF), and the NRF may be used in another NF for NF instance and service discovery.

The above-described information may be provided as a related art for the purpose of helping understanding of the present disclosure. No argument or decision is made as to whether any of the above description may be applied as a prior art related to the present disclosure.

### [Disclosure]

### [Technical Solution]

In embodiments, a management device for network function (NF) selection is provided. The management device may comprise memory configured to store instructions, at least one transceiver; and at least one processor. The instructions, when executed by the at least one processor, may cause the management device to transmit a request message to each NF of a plurality of NFs connected to the management device, receive at least one response message from at least one NF of the plurality of NFs after transmitting the request message to each NF, obtain connection state information of each NF based on the request message transmitted to each NF and the at least one response message from the at least one NF, detect a fault NF among the plurality of NFs based on the connection state information, and perform an NF selection procedure by configuring a restriction for a new call connection using the fault NF.

In embodiments, a method performed by a management device for network function (NF) selection is provided. The method may comprise transmitting a request message to each NF of a plurality of NFs connected to the management device. The method may comprise receiving at least one response message from at least one NF of the plurality of NFs after transmitting the request message to each NF. The method may comprise obtaining connection state information of each NF based on the request message transmitted to each NF and the at least one response message from the at least one NF. The method may comprise detecting a fault NF among the plurality of NFs based on the connection state information. The method may comprise performing an NF selection procedure by configuring a restriction for a new call connection using the fault NF.

In embodiments, a non-transitory computer-readable storage medium is provided. The non-transitory computer-readable storage medium may comprise memory configured to store instructions. The instructions, when executed by the at least one processor, may cause a management device to transmit a request message to each NF of a plurality of NFs connected to the management device, receive at least one response message from at least one NF of the plurality of NFs after transmitting the request message to each NF, obtain connection state information of each NF based on the request message transmitted to each NF and the at least one response message from the at least one NF, detect a fault NF among the plurality of NFs based on the connection state information, and perform an NF selection procedure by configuring a restriction for a new call connection using the fault NF.

### [Description of the Drawings]

FIG. 1A illustrates an example of a communication system.
FIG. 1B illustrates an example of a core network.
FIG. 2 illustrates an example of network function (NF) selection.
FIG. 3 illustrates an example of components of a management device for NF selection.
FIG. 4 illustrates an example of signaling of a management device and an NF for obtaining connection state information.
FIG. 5A illustrates an example of collection of a data set.
FIG. 5B illustrates an example of a learning model for a quality metric.
FIG. 6 illustrates an operation flow of a management device for performing an NF selection procedure based on detection of a fault NF.
FIGS. 7A to 7D illustrate examples of NF selection.
FIG. 8 illustrates an example of a quality metric for policy control function (PCF) selection.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., signal, information, message, signaling, data), terms referring to a data type (e.g., list, set, subset), a term for a calculation state (e.g., step, operation, procedure), a term referring to data (e.g., packet, user stream, information, bit, symbol, codeword), a term referring to a resource (e.g., symbol, slot, subframe, radio frame, subcarrier, resource element (RE), resource block (RB), bandwidth part (BWP), occasion), a term referring to a channel, a term referring to network entities, a term referring to components of a device, and the like, used in the following description, are exemplified for convenience of description. Accordingly, the present disclosure is not limited to terms described below, and another term having an equivalent technical meaning may be used.

A term referring to a signal (e.g., signal, information, message, signaling), a term referring to resources (e.g., symbol, slot, subframe, radio frame, subcarrier, resource element (RE), resource block (RB), bandwidth part (BWP), occasion), a term for a calculation state (e.g., step, operation, procedure), a term referring to data (e.g., packet, user stream, information, bit, symbol, codeword), a term referring to a channel, a term referring to network entities, a term referring to components of a device, and the like, used in the following description are exemplified for convenience of description. Accordingly, the present disclosure is not limited to terms described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

The present disclosure describes various embodiments by using terms used in some communication standards (e.g., 3rd Generation Partnership Project (3GPP), European Telecommunications Standards Institute (ETSI), extensible radio access network (xRAN), open-radio access network (O-RAN)), but this is only an example for description. Various embodiments of the present disclosure may be easily modified and applied in another communication system.

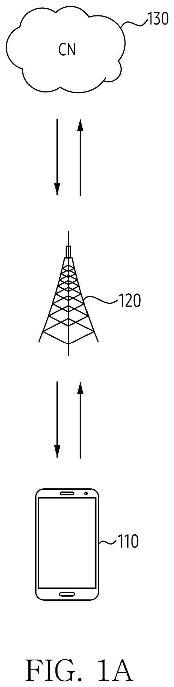

FIG. 1A illustrates an example of a communication system 100.

Referring to FIG. 1A, the communication system 100 may include a terminal 110. The terminal 110 is a device used by a user, and performs communication with a base station 120 through a wireless channel. A link from the base station 120 to the terminal 110 is referred to as a downlink (DL), and a link from the terminal 110 to the base station 120 is referred to as an uplink (UL). In addition, although not illustrated in FIG. 1A, the terminal 110 and another terminal may perform communication with each other through a wireless channel. In this case, a device-to-device link (D2D) between the terminal 110 and the another terminal is referred to as a sidelink, and the sidelink may be interchangeably used with a PC5 interface. In some other embodiments, the terminal 110 may operate without involvement of the user. According to an embodiment, the terminal 110 is a device performing machine type communication (MTC), and may not be carried by the user. In addition, according to an embodiment, the terminal 110 may be a narrowband (NB)-internet of things (IoT) device. The terminal 110 may be referred to as, in addition to a terminal, user equipment (UE), customer premises equipment (CPE), a mobile station, a subscriber station, a remote terminal, a wireless terminal, an electronic device, a user device, or another term having an equivalent technical meaning thereto. Hereinafter, in describing mobility of the terminal of the present disclosure, the terminal 110 is described by being referred to as UE, however, it goes without saying that other terms may be used according to a communication environment or an embodiment.

The base station 120 is a network infrastructure providing wireless access to the terminal 110. The base station 120 has coverage defined based on a distance in which a signal may be transmitted. The base station 120 may be referred to, in addition to a base station, in terms of providing an access network (AN), as a RAN node, a network node, or an access point (AP), or, in terms of a supported radio access technology (RAT), as an eNodeB (eNB), a 5th generation node, a next generation nodeB (gNB), a wireless point, a transmission/reception point (TRP), or another term having an equivalent technical meaning thereto.

In FIG. 1A, a single network entity is illustrated, however, embodiments of the present disclosure are not limited thereto. For example, the base station 120 may be implemented as a distributed deployment according to a central unit (CU) 505 configured to perform functions of upper layers (e.g., PDCP and RRC) of an access network and a distributed unit (DU) configured to perform functions of lower layers (e.g., RLC, MAC, and PHY). For example, in order to reduce installation costs and increase cell coverage capable of being provided, the base station 120 may be implemented as geographically distributed DUs and RUs.

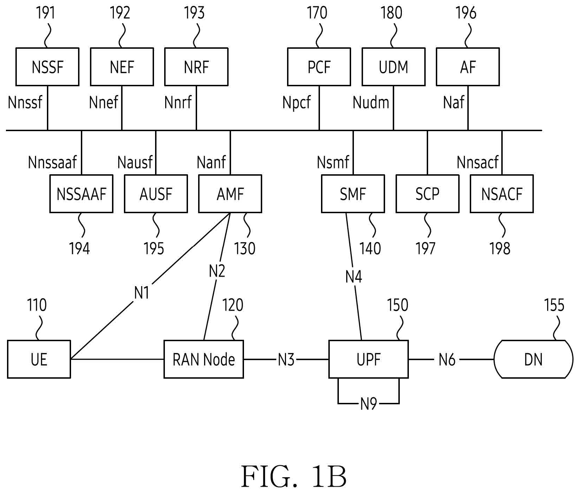

A core network 133 may be configured to connect the base station 120 to a data network. The core network 133 may include various network entities for managing mobility, session management, policy management, and/or a data network connection, and each network entity may indicate a node defining a specific network function. For example, the core network 133 may be referred to as an evolved packet core (EPC) (or an evolved packet system (EPS)), as a set of network entities for an LTE access network. For example, the core network 133 may be referred to as a 5th generation core (5GC) (or a 5th generation system (5GS)), as a set of network entities for an NR access network. As an example of the core network 133, the 5GC is described in detail with reference to FIG. 1B.

FIG. 1B illustrates an example of a core network (e.g., the core network 133).

Referring to FIG. 1B, UE exemplifies the terminal 110 of FIG. 1A, and an RAN node exemplifies the base station 120 of FIG. 1A. Network entities of the core network 133 may include various network functions (NFs). The terminal 110 and the base station 120 may perform communication with the NFs of the core network. For example, the core network 133 may include an access and mobility management function (AMF) 130, a session management function (SMF) 140, a user plane function (UPF) 150, a policy and charging function (PCF) 170, and a unified data management (UDM) 180.

The AMF 130 provides a function for access and mobility management on a per-UE basis (e.g., the terminal 110), and one UE may be basically connected to one AMF. Specifically, the AMF 130 may support signaling between CN (e.g., the core network 133) nodes for mobility between 3GPP access networks, termination of a radio access network (RAN) control plane (CP) interface (i.e., an N2 interface), termination of NAS signaling (N1), non-access stratum (NAS) signaling security (NAS ciphering and integrity protection), access stratum (AS) security control, registration management (registration area management), connection management, idle mode UE reachability (including control and performance of paging retransmission), mobility management control (subscription and policy), intra-system mobility and inter-system mobility support, support of network slicing, SMF selection, lawful intercept (for an AMF event and an interface to an LI system), provision of delivery of session management (SM) messages between the UE and an SMF (e.g., the SMF 140), a transparent proxy for SM message routing, access authentication, access authorization including roaming authorization check, provision of delivery of short message service (SMS) messages between the UE and a short message service function (SMSF), a security anchor function (SAF), and/or security context management (SCM), and the like. Some or all functions of the AMF 130 may be supported within a single instance of one AMF. According to embodiments, the AMF 130 may select an NF from a plurality of NFs. For example, the AMF 130 may perform SMF selection or policy charging function (PCF) selection.

The SMF 140 may provide a session management function. In a case that the UE (e.g., the terminal 110) has a plurality of sessions, each session may be managed by different SMFs. Specifically, the SMF 140 may support a function such as session management (for example, session establishment, modification, and release, including maintenance of a tunnel between the UPF 150 and an AN node (e.g., the base station 120)), UE IP address allocation and management (optionally including authentication), selection and control of a UP function, configuration of traffic steering for routing traffic to an appropriate destination at the UPF, termination of an interface toward policy control functions, enforcement of a control part of policy and quality of service (QoS), lawful intercept (for SM events and an interface to an LI system), termination of an SM portion of NAS messages, downlink data notification, initiation of AN-specific SM information (delivered to the AN node through N2 via the AMF), determination of an SSC mode of a session (e.g., SSC mode 2, or SSC mode 3), a roaming function, and the like. According to embodiments, UPF selection may be performed by the SMF 140. Some or all functions of the SMF 140 may be supported within a single instance of one SMF. According to embodiments, the SMF 140 may select an NF from a plurality of NFs. For example, the SMF 140 may perform UPF selection or PCF selection.

The UPF 150 may deliver a downlink PDU received from a DN 155, via the base station 120, to the terminal 110, or may deliver an uplink PDU received from the terminal 110, via the base station 120, to the DN 155. Specifically, the UPF 150 may support a function such as an anchor point for intra/inter RAT mobility, an external PDU session point of interconnection to a data network, packet routing and forwarding, a user plane portion of packet inspection and policy rule enforcement, lawful intercept, traffic usage reporting, an uplink classifier for supporting routing of traffic flows to a data network, a branching point for supporting a multi-homed PDU session, QoS handling for a user plane (for example, packet filtering, gating, or uplink/downlink rate enforcement), uplink traffic verification (service data flow (SDF) to QoS flow SDF mapping), transport level packet marking in uplink and downlink, downlink packet buffering and downlink data notification triggering functions, and the like. Some or all functions of the UPF 150 may be supported within a single instance of one UPF.

The DN 155 indicates an Internet network for accessing an external communication network. For example, the DN 155 may mean an operator service, Internet access, or a 3^{rd} party service, and the like. The DN 155 may transmit a downlink protocol data unit (PDU) to the UPF 150, or may receive, from the UPF 150, a PDU transmitted from the terminal 110.

The PCF 170 may provide a function of determining policies such as mobility management and session management by receiving information on a packet flow from an application server. Specifically, the PCF 170 supports a function such as supporting a unified policy framework for controlling network operation, provision of policy rules so that CP function(s) (for example, the AMF 130, the SMF 140, and the like) may enforce the policy rules, implementation of a frontend for accessing subscription information related to policy decision in a user data repository (UDR), and the like.

The UDM 180 stores subscription data of a user, policy data, and the like. The UDM 180 may include two portions, that is, an application front end (FE) and a user data repository (UDR).

The core network 133 may include various NFs in addition to the above-described network entities/network functions. For example, the core network 133 may include a network slice selection function (NSSF) 191, a network exposure function (NEF) 192, a network repository function (NRF) 193, a network slice-specific authentication and authorization function (NSSAAF) 194, an authentication server function (AUSF) 195, an application function (AF) 196, a service communication proxy (SCP) 197, and a network slice admission control function (NSACF) 198.

The NSSF 191 may support a function of selecting a network slice instance set providing a service to the terminal 110. The NSSF 191 may determine allowed network slice selection assistance information (NSSAI), and, if needed, may determine mapping to a subscribed single (S)-NSSAI. The NSSF 191 may determine configured NSSAI, and, if needed, may determine mapping to a subscribed S-NSSAI. The NSSF 191 may determine an AMF set used to serve the UE, or may determine the AMF set by querying the NRF based on configuration. The NSSF 191 may provide support for network slice restriction and network slice instance restriction based on NWDAF analysis.

The NEF 192 may provide a means for securely exposing services and capabilities, for example, for a 3rd party, internal exposure/re-exposure, an application function, and edge computing, provided by 3GPP NFs. The NEF 192 receives information from another NF or based on a capability exposed by another NF. The NEF 192 may store the received information as structured data by using a standardized interface to a data storage network function. The stored information is re-exposed by the NEF 192 to another NF and an AF (e.g., the AF 196), and may be used for another purpose such as analysis.

The NRF 193 may support a service discovery function. The NRF 193 may receive an NF discovery request from an NF instance and may provide information of a discovered NF instance to the NF instance. In addition, the NRF 193 maintains available NF instances and services supported by them. Discovery of an NF and selection of an NF may be performed by a specific NF itself or may be performed with reference to the NRF 193.

The NSSAAF 194 may support an authentication and authorization function for each network slice.

The AUSF 195 stores data for authentication of UE (e.g., the terminal 110).

The AF 196 may interact with a 3GPP core network for service provision (for example, supporting a function such as application influence on traffic routing, access to network capability exposure, and interaction with a policy framework for policy control).

The SCP 197 may perform a function such as indirect communication, delegated discovery, message delivery and routing to a target NF/NF service, message delivery and routing to a next hop SCP, communication security (for example, authorization of an NF service consumer to access an NF service producer API), load balancing, monitoring, overload control, and the like. The SCP 197 may be disposed in a distributed manner. For example, two or more SCPs may exist in a communication path between NF services. It may rout a message through the SCPs. For example, in order to route the message (that is, next SCP hop discovery), the SCP 197 may register a profile with an NRF (e.g., the NRF 193). For another example, the SCP 197 may use a local configuration. Some or all functions of the SCP 197 may be supported within a single instance of one SCP.

The NSACF 198 may monitor and control the number of UEs registered for each network slice, for a network slice to which network slice admission control is applied.

In a 3GPP system, a conceptual link connecting NFs within a 5G system is defined as a reference point or an interface. The following exemplifies a reference point included in the 5G system architecture illustrated in FIG. 1.
- N1: a reference point or an interface between the terminal 110 and the AMF 130
- N2: a reference point or an interface between the base station 120 and the AMF 130
- N3: a reference point or an interface between the base station 120 and the UPF 150
- N4: a reference point or an interface between the SMF 140 and the UPF 150
- N5: a reference point or an interface between the PCF 170 and the AF 196
- N6: a reference point or an interface between the UPF 150 and the DN 155
- N7: a reference point or an interface between the SMF 140 and the PCF 170
- N8: a reference point or an interface between the UDM 180 and the AMF 130
- N9: a reference point or an interface between two core UPFs (e.g., the UPF 150)
- N10: a reference point or an interface between the UDM 180 and the SMF 140
- N11: a reference point or an interface between the AMF 130 and the SMF 140
- N12: a reference point or an interface between the AMF 130 and the AUSF 195
- N13: a reference point or an interface between the UDM 180 and the AUSF 195
- N14: a reference point or an interface between two AMFs (e.g., the AMF 130)
- N15: in a case of a non-roaming scenario, a reference point between the PCF 170 and the AMF 130, and, in a case of a roaming scenario, a reference point or an interface between the PCF 170 and the AMF 130 within a visited network

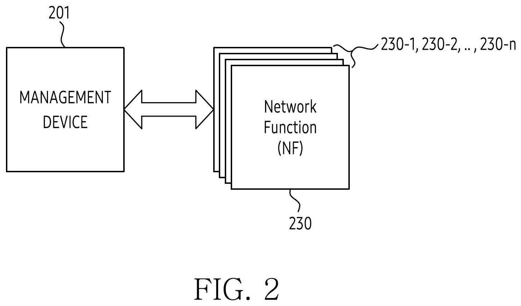

FIG. 2 illustrates an example of network function (NF) selection. The NF selection indicates identifying an NF among a plurality of NFs. A type of the plurality of NFs is one of the NFs (e.g., the AMF 130, the SMF 140, the UPF 150, the PCF 170, the NEF 192, and the like) exemplified through FIG. 1B.

Referring to FIG. 2, a management device 201 may perform NF selection according to embodiments of the present disclosure. For example, the management device 201 may select an NF from among the plurality of NFs (e.g., NF 230-1, NF 230-2, ..., NF 230-N). The management device 201 may activate a call connection using the NF, or may use services provided by the NF (hereinafter, NF services). The NF may expose one or more NF services. An NF service indicates one of types of a capability exposed to another NF (e.g., an NF service consumer) by an NF (e.g., an NF service producer) through a service based interface (SBI). Hereinafter, in the present disclosure, the management device 201 may be understood as an NF consumer in terms of being a subject performing the NF selection, and the NF selected by the management device 201 may be understood as an NF producer.

The management device 201 may be another NF different from an NF to be selected, or a network entity associated with a specific NF. According to an embodiment, the management device 201 may be an entity operating as the AMF 130 or a separate device connected to the AMF 130. For example, an NF 230 may be the SMF 140. The management device 201 may select a specific SMF from among a plurality of SMFs as the AMF 130 or for the AMF 130. For example, the NF 230 may be the PCF 170. The management device 201 may select a specific PCF from among a plurality of PCFs as the AMF 130 or for the AMF 130. For example, the NF 230 may be a charging function (CHF). The management device 201 may select a specific CHF from among a plurality of CHFs as the AMF 130 or for the AMF 130.

According to an embodiment, the management device 201 may be an entity operating as the SMF 140 or a separate device connected to the SMF 140. For example, the NF 230 may be the UPF 150. The management device 201may select a specific UPF from among a plurality of UPFs as the SMF 140 or for the SMF 140. For example, the NF 230 may be the PCF 170. The management device 201 may select a specific PCF from among a plurality of PCFs as the SMF 140 or for the SMF 140. For example, the NF 230 may be a CHF. The management device 201 may select a specific CHF from among a plurality of CHFs as the SMF 140 or for the SMF 140.

According to an embodiment, the management device 201 may be an entity operating as the PCF 170 or a separate device connected to the PCF 170. For example, the NF 230 may be a CHF. The management device 201 may select a specific CHF from among a plurality of CHFs as the PCF 170 or for the PCF 170.

According to an embodiment, the management device 201 may be a separate device connected to a base station 120. For example, the NF 230 may be the AMF 130. The management device 201, for the base station 120, may select a specific AMF from among a plurality of AMFs.

NF selection for a service in a core network (e.g., the core network 133, EPC, or 5GC) may be used for load distribution and fault management. In general, NFs may form a group, and each NF belonging to the group may serve as a backup NF of another NF. For example, in a case that a connection with a specific NF is disconnected, an NF consumer may continue a service through another NF in the group. As technology advances, types of NFs in the core network (e.g., the core network 133) are increasing and are becoming smaller, and thus network management through NF selection is becoming more complex. Conventionally, a backup NF has been selected only in an extreme case in which a connection with a specific NF is disconnected. Accordingly, it is difficult to exclude, from selection, an NF in which quality degradation occurs while a connection is maintained, or to take a measure in advance before a communication unavailable situation occurs. In order to exclude a problematic NF or to adjust a selection ratio, it is required that an operator manually control. However, it is practically difficult to monitor and manually control a plurality of NFs. Accordingly, techniques for automatic fault control by using network data collected from each NF are required. In order to solve the above-described problems, in the present disclosure, techniques for detecting, in advance, an NF in which a fault is predicted through network data statistics and limiting call inflow to a corresponding NF are described.

The management device 201 according to embodiments of the present disclosure may evaluate a service quality of an NF linked with the management device 201 and may perform fault control of the NF based on analyzed network data statistics. In order to evaluate the service quality of an NF connected to the management device 201, the management device 201 may transmit a request message to each NF. The management device 201 may receive a response message from at least one NF. The response message may indicate acceptance or rejection. In addition, the management device 201 may not receive any response from the NF (that is, non-response). The management device 201 may obtain information on a connection state of the NF based on a result according to the request message. The management device 201 may obtain information on the service quality of the NF based on the information on the connection state. The management device 201 may detect an NF for which occurrence of a fault is predicted (hereinafter, a fault NF) based on the service quality of each NF. The management device 201 may detect (or identify, determine) the fault NF from among a plurality of NFs (e.g., NF 230-1, NF 230-2, ..., NF 230-N). The management device 201 may limit new call inflow to the fault NF or may reset a distribution ratio so that a call distribution ratio to the fault NF is lowered.

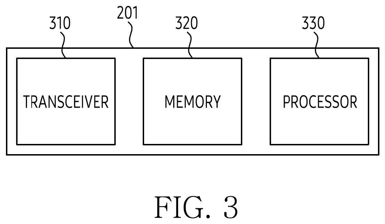

FIG. 3 illustrates an example of components of a management device (e.g., the management device 201) for NF selection. The management device 201 may be communication equipment operating as another NF connected to an NF 230 to be selected, a separate device connected to the another NF, and/or a separate device connected to a base station (e.g., the base station 120). Hereinafter, terms such as "... unit" and "... module" used herein mean a unit for processing at least one function or operation, and may be implemented as hardware, software, or a combination of hardware and software.

Referring to FIG. 3, an electronic device may include a transceiver 310, memory 320, and a processor 330.

The transceiver 310 provides an interface for performing communication with other devices in a network. That is, the transceiver 310 converts a bit stream transmitted from the electronic device to another electronic device into a physical signal and converts a physical signal received from another electronic device into a bit stream. That is, the transceiver 310 may transmit or receive a signal. Accordingly, the transceiver 310 may be referred to as a modem, a communication unit, a transmit unit, a receive unit, or a transmit/receive unit. In this case, the transceiver 310 allows the electronic device to communicate with other electronic devices or systems via a backhaul connection (e.g., a wired backhaul or a wireless backhaul) or via the network. The transceiver 310 may include one or more transceivers.

In a wired communication environment, the transceiver 310 may perform functions for transmitting and receiving a signal. The transceiver 310 may include a wired interface for controlling a direct connection between devices through a transmission medium (e.g., a copper line, or an optical fiber). For example, the transceiver 310 may support an N2 interface. The transceiver 310 may deliver an electrical signal to a node of a base station (e.g., a gNB, a gNB-CU, a gNB-CU-CP) through a copper line or may perform conversion between an electrical signal and an optical signal. The management device 210 may be connected to one or more base stations (e.g., the base station 120) through the transceiver 310. In addition, in a wireless communication environment, the transceiver 310 may also perform functions for transmitting and receiving a signal. For example, the transceiver 310 may support an N1 interface. The management device 201 may support NAS signaling through the transceiver 310. The management device 201 may transmit an NAS message to the terminal 110 through the transceiver 310.

The memory 320 stores data such as a basic program, an application program, and configuration information for an operation of the management device 201. The memory 320 may be configured as a volatile memory, a non-volatile memory, or a combination of a volatile memory and a non-volatile memory. And the memory 320 provides the stored data according to a request of the processor 330. The memory 320 may be referred to as a storage unit.

The processor 330 controls overall operations of the management device 201. For example, the processor 330 transmits and receives a signal through the transceiver 310. In addition, the processor 330 writes data to the memory 320 and reads data from the memory 320. The processor 330 may be referred to as a controller. To this end, the processor 330 may be configured as a plurality of processors or may include at least one sub-processor. According to various embodiments, the processor 330 may control the management device 201 to perform operations according to various embodiments described in the present disclosure.

In the present disclosure, an NF is a logical element for supporting a specific network service and may be implemented not only as separate hardware but also as software. For example, in a process in which the management device 201 transmits or receives a message with an NF, the management device 201 may call and execute a command corresponding to message transmission, instead of directly transmitting the message to a physical entity. The management device 201 may be implemented as software including one or more instructions. For example, the management device 201 may call at least one instruction among the one or more instructions stored in a storage medium and execute it. This enables a device to be operated to perform at least one function according to the called at least one instruction. The one or more instructions may include code generated by a compiler or code executable by an interpreter. For network virtualization, operations of the management device 201 according to embodiments may be implemented in a form of a recording medium (e.g., memory).

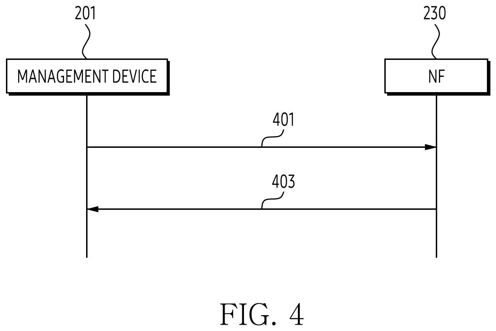

FIG. 4 illustrates an example of signaling between a management device (e.g., the management device 201) and an NF (e.g., the NF 230) for obtaining connection state information. The NF 230 exemplifies one NF among the NF 230-1, NF 230-2, ..., NF 230-N of FIG. 2. Hereinafter, operations of the NF 230 may be understood as operations of a device configured to perform the NF 230.

Referring to FIG. 4, in operation 401, the management device 201 may transmit a request message to the NF 230. The request message may be used to request provision of an NF service from the NF 230. The request message may be used to check a connection state of the NF 230. The connection state may indicate a communication state associated with a call connection using the NF 230.

In operation 403, the management device 201 may receive a response message from the NF 230. The NF 230 may generate the response message in response to a request of the management device 201, which is a service consumer. The NF 230 may transmit the response message to the management device 201 within a designated time (e.g., a length of a timer) from a time point at which the request message is delivered. Feedback on the request message may be classified into three types. The feedback may be an accept of the request message, a reject of the request message, or non-response. In a case that the management device 201 does not receive any response to the request message from the NF 230 during the designated time, the management device 201 may determine that the NF 230 is in a non-response state.

In FIG. 4, signaling through direct communication between the management device 201 and the NF 230 is illustrated, however, embodiments of the present disclosure are not limited thereto. For example, the management device 201 and the NF 230 may perform indirect communication by using an SCP (e.g., the SCP 197). In the indirect communication, an NF service consumer may communicate with an NF service producer through the SCP 197. The NF service consumer may directly perform discovery of a target NF service producer or may delegate discovery of the target NF service producer to the SCP 197. For example, the management device 201 may transmit a request message to the NF 230 through the SCP 197. The management device 201 may transmit a response message (e.g., an acceptance message, or a rejection message) to the NF 230 through the SCP 197 from the NF 230.

In order to evaluate the connection state of the NF 230, the management device 201 may determine various types of quality attribute information. The management device 201 may collect data for determining the connection state of the NF 230 through request message(s) and/or response message(s). According to an embodiment, the management device 201 may obtain connection failure data as the connection state of the NF 230. For example, when a rejection message is received in response to a request message, the management device 201 may determine that the request message has failed. The management device 201 may obtain the connection failure data based on a frequency of reception of rejection messages. For example, the management device 201 may periodically transmit a request message to the NF 230 during the designated time. The management device 201 may count the number of the rejection messages received from the NF 230. The management device 201 may record the number of the reject messages or record a ratio of the number of reject messages for the number of the request messages. For another example, the management device 201 may transmit request messages to the NF 230 for a designated number of times. The management device 201 may count the number of the rejection messages received from the NF 230. The management device 201 may record the number of the reject messages or record a ratio of the number of reject messages for the designated number of times. As the number of the rejection messages is higher, the connection failure data may indicate that the connection state (e.g., the call connection using the NF 230) of the NF 230 is not stable.

According to an embodiment, in determining a degree of the connection state, the management device 201 may apply a weight to derived data (e.g., the number of rejections, a ratio of rejection messages for request messages). For example, the rejection message may include cause information in order to inform the management device 201 of a cause of rejection. The management device 201 may collect the cause information of the received rejection message. The management device 201 may determine a weight based on the cause information of the rejection message and may apply the determined weight to the connection failure data. For example, the management device 201 may determine a weight value corresponding to a type of the cause information. The management device 201 may determine the weight value within a designated range (e.g., 0 to 5) according to the type of the cause information. As an example, a weight value to be applied in a case that the type of the cause information is associated with call processing (e.g., overload) may be greater than a weight value to be applied in a case that the type of the cause information is not associated with the call processing (e.g., an identification error, or an authentication error). As an example, a weight value to be applied in a case that the type of the cause information is associated with communication quality of the NF 230 may be greater than a weight value to be applied in a case that the type of the cause information is not associated with the communication quality of the NF 230.

According to an embodiment, the management device 201 may obtain timeout data as the connection state of the NF 230. For example, when a response message is not received during the designated time (e.g., the length of the timer) in response to a request message, the management device 201 may determine that the NF 230 is non-responsive. The management device 201 may obtain the timeout data based on a frequency at which non-response occurs, that is, a frequency of occurrence of timeouts. For example, the management device 201 may periodically transmit a request message to the NF 230 during the designated time. The management device 201 may count the number of cases in which a response from the NF 230 does not arrive. The management device 201 may record the number of the cases or record a ratio of non-response for the number of the request messages. For another example, the management device 201 may transmit request messages to the NF 230 for a designated number of times. The management device 201 may count the number of the rejection messages received from the NF 230. The management device 201 may count the number of cases in which a response from the NF 230 does not arrive. The management device 201 may record the number of the cases or record a ratio of non-response for the number of the request messages. As the number of non-responses is higher, the timeout data may indicate that the connection state (e.g., the call connection using the NF 230) of the NF 230 is not stable.

According to an embodiment, the management device 201 may apply a weight to the derived data (e.g., the number of the non-responses, or a ratio of the non-response) in determining the degree of the connection state. Even in a case of a timeout, a weight may be applied, like the cause information of the rejection messages described above. Since the timeout may indicate a more critical connection state than the connection failure data, the management device 201 may apply a higher weight to the timeout data than to the connection failure data.

According to an embodiment, the management device 201 may obtain RTT data as the connection state of the NF 230. For example, the management device 201 may measure a time taken from a time point at which a request message is transmitted to a time point at which a response message corresponding to the request message is received. For example, the response message may be an acceptance message. A measurement of the RTT may be performed only in a case that the request is accepted. For another example, the response message may include an acceptance message and a rejection message. Even if the request is not accepted, the measurement of the RTT may be performed. The management device 201 may obtain the RTT data each time the management device 201 is linked with the NF. For example, the management device 201 may periodically transmit a request message to the NF 230 during the designated time. The management device 201 may measure the RTT based on the response message received from the NF 230, and may record data including the measured RTT. For example, the management device 201 may transmit request messages to the NF 230 based on the designated number of times. The management device 201 may measure the RTT based on the response message received from the NF 230, and may record data including the measured RTT.

**[Table 1]**

| NF Type | ATTEMP T | SUCCESS | TIMEOUT | FAIL | C_RATIO | AVG_RT T |
|---|---|---|---|---|---|---|
| PCF | 5 | 3 | 2 | 0 | 60.00 | 1423 |
| PCF | 5 | 4 | 0 | 1 | 80.00 | 3241 |
| CHF | 5 | 3 | 1 | 1 | 80.00 | 1623 |

'NF Type' indicates a type of the NF 230. For example, the AMF 130, as the management device 201, may measure a connection state of a PCF 170 for selection of the PCF 170. 'ATTEMPT' indicates the number of attempts, 'SUCCESS' indicates the number of successes, "TIMEOUT" indicates the number of timeouts (e.g., non-response within the designated time), 'FAIL' indicates the number of failures, 'C_RATIO' indicates a success ratio, and 'AVG_RTT' indicates an average RTT value (e.g., a unit: ms).

In the present disclosure, techniques for fault control of an NF based on Network Data Analytics are described. The management device 201 may measure a quality of the connection state of NFs to be selected, as connection failure data, timeout data, and RTT data. The management device 201 may store the measured results as data. The management device 201 may perform machine learning based on the data. The management device 201 may, through the machine learning, pre-detect an NF (e.g., a fault NF) for which occurrence of a problem is predicted (e.g., a quality degradation is expected). If a quality metric of a quality attribute (e.g., the connection failure data, the timeout data, or the RTT data) of the NF is greater than a threshold of a corresponding quality attribute, the management device 201 may restrict a ratio of new calls newly introduced to the corresponding NF. The management device 201 may automatically detect qualities of the NFs and, by restricting new calls to the NF in which the problem has occurred, improve an overall quality of a network and reduce an operating cost.

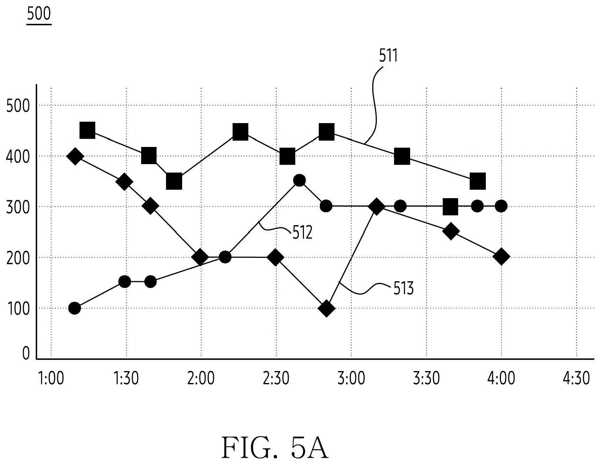

FIG. 5A illustrates an example of collection of a data set. The data set may be used for learning (e.g., machine learning) of an NF (e.g., the NF 230).

Referring to FIG. 5A, a graph 500 indicates a first data set 511 including connection failure data, indicates a second data set 512 including timeout data, and indicates a third data set 513 including RTT data. A management device 201 may classify data of collected connection state information for each quality attribute (e.g., the connection failure data, the timeout data, and the RTT data), and may arrange the classified data in units of a specific time period. The first data set 511 may be collected based on the connection failure data for indicating a frequency of reception of rejection messages received in response to transmissions of request messages. The second data set 512 may be collected based on the timeout data for indicating a frequency of occurrence of timeouts for the request messages. The third data set 513 may be collected based on the RTT data between the NF 230 and the management device 201.

The management device 201 may perform learning based on the first data set 511, the second data set 512, and the third data set 513. For example, the management device 201 may use the first data set 511, the second data set 512, and the third data set 513 as an input of a state model. The management device 201 may collect data during a period to be predicted (hereinafter, a prediction period), and may use the collected data as a label for the learning. The management device 201 may determine an expectation quality metric in the prediction period, as a result of the learning. The management device 201 may determine whether to set a restriction for a new call connection using a corresponding NF based on the expectation quality metric. For example, if the expectation quality metric is greater than or equal to a threshold, the management device 201 may determine that there is a problem in the connection state for the NF. If the expectation quality metric is greater than or equal to the threshold, the management device 201 may set a restriction for a new call connection using the NF. If the expectation quality metric is less than the threshold, the management device 201 may not set an additional restriction for the new call connection using the NF.

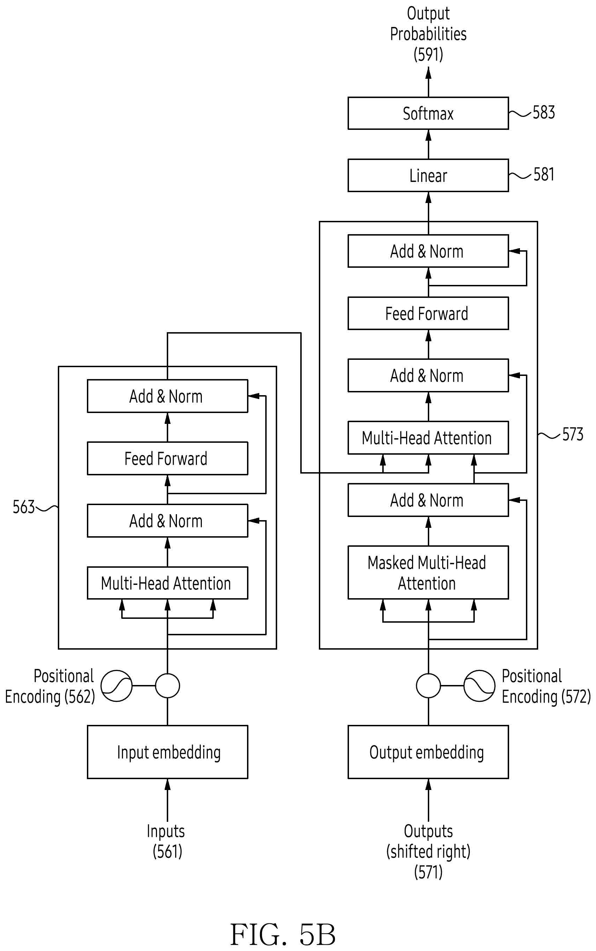

FIG. 5B illustrates an example of a learning model for a quality metric. The learning model may be configured for artificial intelligence (AI) learning. For example, learning described below may operate based on data collected for a predetermined time from the most recent.

Referring to FIG. 5B, the management device 201 may perform machine learning based on the collected data sets. As a model of the machine learning, various models may be used. For example, as the model, a transformer advantageous for learning time-series data may be used. The transformer may use a self-attention mechanism.

First input data 561 may include a source sequence. For example, the source sequence may be data sets (e.g., the first data set 511, the second data set 512, and the third data set 513) for each item of the connection state information (e.g., the connection failure data, the timeout data, and the RTT data). As input embedding and a first positional encoding 562 are applied to the source sequence, an input of an encoder 563 may be determined. Second input data 571 may include a sequence (hereinafter, a shifting sequence) obtained by shifting a previous output sequence in a right direction. As input embedding and a second positional encoding 572 are applied to the shifting sequence, an input of a decoder 573 may be determined. The encoder 563 may generate an output through an attention block and a feed-forward block. The output of the encoder 563 may be input to an attention block of the decoder 573. The decoder 573 may generate an output through a masked multi-head attention block, an attention block, and a feed-forward block. The output of the decoder 573 may be sequentially input to a linear layer 581 and a softmax layer 583. The linear layer 581 may be a fully connected (FC) layer. The linear layer 581 may convert the output of the decoder 573 into a logit vector. The softmax layer 583 may apply a softmax function to the logit vector. The softmax function may make a range of all element values of the logit vector be greater than or equal to 0 and less than or equal to 1, and may make a sum of all the element values be 1. The output data 591 may include an output sequence. The output sequence may be used again for the second input data 571. For example, the output sequence may indicate an expectation quality metric (e.g., the connection failure data, the timeout data, and the RTT data) in a specific period. As an example, based on an element having a high probability value in the output sequence, a value of the expectation quality metric in the specific period may be determined.

In FIG. 5, a transformer model using attention is exemplified, but embodiments of the present disclosure are not limited thereto. The model for the learning may include, in addition to the transformer illustrated in FIG. 5, another type of model. For example, the model may include a model of a recurrent neural network (RNN) series. As an example, models of the RNN series such as a long short-term memory (LSTM) or a gated recurrent units (GRU) may be used. As another example, the model may of course be replaced with another AI model that is not the RNN.

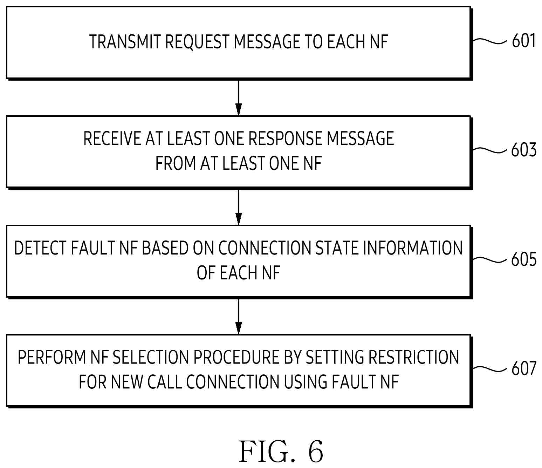

FIG. 6 illustrates an operation flow of a management device (e.g., the management device 201) for performing an NF selection procedure based on detection of a fault NF.

In operation 601, the management device 201 may transmit a request message to each NF (e.g., NF 230-1, NF 230-2, ..., NF 230-N). The management device 201 may identify a plurality of NFs connected with the management device 201. According to an embodiment, the management device 201 may identify the plurality of NFs based on at least one of a packet data unit (PDU) session, a data network name, single-network slice selection assistance information (S-NSSAI) for identifying a network slice, and location information of a terminal. The plurality of NFs may form an NF group. According to an embodiment, an NF of the NF group may be used as a backup NF when a service connection using another NF is disconnected. The management device 201 may transmit the request message to each NF of the plurality of NFs. The request message may be used to check a connection state of each NF.

In operation 603, the management device 201 may receive at least one response message from at least one NF. A response type of an NF may be various. For example, an NF that has received the request message may transmit, to the management device 201, a response message indicating acceptance or rejection of the request message. An NF that has not received the request message may have difficulty in responding. Even if an NF receives the request message, the NF may not transmit the response message to the management device 201 due to overload or instability of a call connection. The management device 201 may record response data for each NF to which the request message is transmitted. For example, the response data may include success, failure, or timeout (e.g., non-response during a predetermined time). The number of the request messages transmitted to one NF may be understood as the number of attempts. The management device 201 may collect the response data for each NF.

In operation 605, the management device 201 may detect a fault NF based on connection state information of each NF. The management device 201 may obtain the connection state information of each NF based on the request messages transmitted to the NFs and the at least one response message received from the at least one NF. For example, for each NF, the management device 201 may obtain connection state information of a corresponding NF based on response data for the request messages. For example, the management device 201 may obtain connection failure data (e.g., a failure rate (e.g., a ratio of rejection messages to the number of transmission attempts), or the number of failures (e.g., the number of the rejection messages)) based on the number of transmitting the request messages to the NF (e.g., the number of transmission attempts) and the number of the rejection messages received. For example, the management device 201 may obtain timeout data (e.g., the number of timeouts, or a timeout ratio) based on the number of transmitting the request messages to the NF (e.g., the number of transmission attempts) and the number of timeouts. For example, the management device 201 may obtain RTT data based on a difference between a time point at which the request message is transmitted to the NF and a time point at which a response message (e.g., an acceptance message, or a response message including the acceptance message and a rejection message) is received. The RTT data may be calculated based on RTT values measured for each request message. For example, the RTT data may include an average value, a median value, a maximum value (a peak value), and/or another representative value of the measured RTT values.

The management device 201 may classify the connection state information of the NF by quality attribute. Hereinafter, description regarding the NF may be commonly applied to each NF of the plurality of NFs in the operation 601. The management device 201 may distinguish the connection state information by the quality attribute (e.g., the connection failure data, the timeout data, and the RTT data), and may arrange the distinguished quality attributes in units of a specific time period. According to an embodiment, based on the arrangement, the management device 201 may obtain a first data set (e.g., the first data set 511). The management device 201 may perform learning based on the first data set. The management device 201 may obtain an expected first quality metric, as a result of the learning. The first quality metric may indicate a probability or a frequency at which a rejection message arrives when a request message is sent to the NF in a specific period. As the first quality metric is higher, it indicates that a probability that a connection to the NF fails is higher. According to an embodiment, based on the arrangement, the management device 201 may obtain a second data set (e.g., the second data set 512). The management device 201 may perform learning based on the second data set. The management device 201 may obtain an expected second quality metric, as a result of the learning. The second quality metric may indicate a probability or a frequency at which a timeout occurs when the request message is sent to the NF in the specific period. As the second quality metric is higher, it indicates that a probability that a connection to the NF fails due to the timeout is higher. According to an embodiment, based on the arrangement, the management device 201 may obtain a third data set (e.g., the third data set 513). The management device 201 may perform learning based on the third data set. The management device 201 may obtain an expected third quality metric as a result of the learning. The third quality metric indicates a difference between a time point at which the request message is sent to the NF in the specific period and a time point at which the response message is received. As the third quality metric is higher, it means a connection delay, and thus a probability that a connection to the NF is delayed may be higher.

The management device 201 may detect a fault NF based on the quality metric. The management device 201 may determine a quality metric for each NF of the NF group. The management device 201 may monitor the quality metric for each NF and, based on a result of the monitoring, detect, among the plurality of NFs of the NF group, an NF for which occurrence of a fault is predicted (i.e., a fault NF). According to an embodiment, the management device 201 may compare the quality metric with a threshold. The management device 201 may determine a corresponding NF as a fault NF when the quality metric is greater than the threshold. The management device 201 may determine that the corresponding NF is normal when the quality metric is lower than or equal to the threshold.

The management device 201 may determine a quality metric for each quality attribute and may perform a comparison using the threshold for each quality attribute. For example, the management device 201 may determine a first quality metric associated with a frequency of rejection messages. The management device 201 may compare the first quality metric with a first threshold set for the frequency of the rejection messages. For example, the management device 201 may determine a second quality metric associated with a frequency of occurrence of timeouts. The management device 201 may compare the second quality metric with a second threshold set for the frequency of occurrence of the timeouts. For example, the management device 201 may determine a third quality metric associated with the RTT. The management device 201 may compare the third quality metric with a third threshold set for the RTT.

The management device 201 may determine whether a fault NF is detected based on a result of the comparison. For example, when a result being greater than a set threshold is obtained for any one of the quality attributes, the management device 201 may determine a corresponding NF as the fault NF. For another example, when the number of quality attributes having a result being greater than the set threshold among the quality attributes is greater than or equal to a designated number (e.g., 2), the management device 201 may determine a corresponding NF as the fault NF. For still another example, when results being greater than the threshold are obtained for all of the quality attributes, the management device 201 may determine a corresponding NF as the fault NF.

In the above-described example, an example in which learning is performed for each quality attribute and quality metrics (e.g., the first quality metric, the second quality metric, and the third quality metric) are output as a result of the learning has been described, but embodiments of the present disclosure are not limited thereto. For example, at least two of the above-described quality metrics may be merged in a learning process. For another example, at least one of the above-described quality metrics may be divided into detailed quality metrics by being classified in the learning process.

In operation 607, the management device 201 may perform the NF selection procedure by setting a restriction for a new call connection using the fault NF. The management device 201 may set the restriction for the new call connection using the fault NF. According to an embodiment, the management device 201 may lower a distribution ratio of the new call connection using the fault NF. The management device 201 may perform the NF selection procedure based on distribution ratio information. The distribution ratio information may indicate a ratio set to distribute NFs of the NF group of the management device 201. For example, the management device 201 may distribute the NFs of the NF group at a fixed ratio based on a capacity of each NF of the NF group. The management device 201 may adjust previously set distribution ratio information based on identifying the fault NF. For example, the NF group may include four NFs. A distribution ratio of the NF group may be 1:1:1:1. The management device 201 may lower the distribution ratio to the fault NF, and the distribution ratio may be 1:1:1/3:1. A value corresponding to the fault NF may be lowered from '1' to '1/3'. The distribution ratio of the new call connection using the fault NF may be lowered from 25% to 10%. By lowering the distribution ratio of the new call connection using the fault NF, the management device 201 may cause fewer new calls to be distributed to the fault NF than to another NF of the NF group.

According to an embodiment, the management device 201 may reject a request for the new call connection using the fault NF. Through the rejection, the management device 201 may lower a frequency of the new call connection using the fault NF. The management device 201 may determine reject ratio information. For example, the management device 201 may determine the reject ratio information for the fault NF. As an example, in a case that the reject ratio information is 70%, the management device 201 may reject 70% among call connection requests using the fault NF. Meanwhile, even if the management device rejects the call connection using the fault NF, in an access network (e.g., the terminal 110, or the base station 120), a new call may be requested again, and signaling may rather increase. In order to reduce an overhead due to an increase in signaling, according to an embodiment, the management device 201 may set a back-off timer for the terminal 110. The management device 201 may transmit information on the back-off timer to the terminal 110. For example, in a case that the management device 201 operates as an AMF 130, the management device 201 may transmit the information on the back-off timer to the terminal 110 through NAS signaling. The back-off timer may be used to prevent reconnection of the terminal 110 by a length of the back-off timer. When the length of the back-off timer is set to the same value for all terminals, access signals may be concentrated at an expiration time point of the back-off timer. As a non-limiting example, in order to distribute the access signals, the management device 201 may set the length of the back-off timer differently for each terminal. For example, the management device 201 may set the length of the back-off timer of the terminal by adding a random offset (e.g., an offset value randomly determined for each terminal) to a common timer value.

The management device 201 may perform the NF selection procedure after setting the restriction for the fault NF. The management device 201 may identify an NF among the plurality of NFs of the NF group. For example, the management device 201 may perform the NF selection procedure for the plurality of NFs according to a distribution ratio adjusted so that the distribution ratio of the fault NF is lowered. For example, the management device 201 may perform the NF selection procedure for remaining NFs excluding the fault NF among the plurality of NFs.

In FIG. 6, operations in which a fault NF is identified by comparing a quality metric with a threshold and NF selection is performed by restricting a call connection to the fault NF have been described. In FIG. 6, an example in which a threshold is set for each quality attribute has been described, but the embodiments of the present disclosure are not limited thereto. A plurality of thresholds may be set for each quality attribute. The plurality of thresholds may indicate a level of each quality metric, and the management device 201 may perform different actions according to the level. The management device 201 may configure three thresholds for fault detection for each quality attribute. The three thresholds may include a lower threshold (or a minor threshold), a reference threshold (or a major threshold), and an upper threshold (or a critical threshold).

According to an embodiment, the management device 201 may obtain the first quality metric associated with the connection failure data (e.g., a failure ratio). The management device 201 may check a lower threshold (e.g., 'FAIL_MINOR_LIMIT'), a reference threshold (e.g., 'FAIL_MAJOR_LIMIT'), and an upper threshold (e.g., 'FAIL_CRITICAL_LIMIT') for the first quality metric. Each threshold may indicate a restriction of a ratio of the number of rejections for the total number of attempts (e.g., FAIL_RATIO, a ratio of the number of the rejection messages for the number of the request messages). The management device 201 may check information on the minimum number of attempts for each threshold. When the minimum number of attempts is small, an overall failure ratio may rapidly deteriorate even with the small number of failures. Accordingly, a restriction for the minimum number of attempts corresponding to each threshold may be set so that the threshold for the failure ratio and the first quality metric are compared in a state in which a specific level of the number of attempts is ensured. For example, the thresholds for the first quality metric may be configured as illustrated in a table below.

**[Table 2]**

| LEVEL | MIN_COUNT | FAIL_RATIO |
|---|---|---|
| FAIL_MINOR_LIMIT | 3000 | 10% |
| FAIL_MAJOR_LIMIT | 5000 | 30% |
| FAIL_CRITICAL_LIMIT | 10000 | 50% |

According to an embodiment, the management device 201 may obtain the second quality metric associated with the timeout data (e.g., a timeout ratio). The management device 201 may check a lower threshold (e.g., 'TO_MINOR_LIMIT'), a reference threshold (e.g., 'TO_MAJOR_LIMIT'), and an upper threshold (e.g., 'TO_CRITICAL_LIMIT') for the second quality metric. Each threshold may indicate a restriction of a ratio of the number of timeouts for the total number of attempts (e.g., TOUT_RATIO, a ratio of the number of occurrences of the timeouts for the number of the request messages). The management device 201 may check information on the minimum number of attempts for each threshold. When the minimum number of attempts is small, an overall timeout ratio may rapidly deteriorate even with the small number of timeouts. Accordingly, a restriction for the minimum number of attempts corresponding to each threshold may be set so that the threshold for the timeout ratio and the second quality metric are compared in a state in which a specific level of the number of attempts is ensured. For example, the thresholds for the second quality metric may be configured as illustrated in a table below.

**[Table 3]**

| LEVEL | MIN_COUNT | TOUT_RATIO |
|---|---|---|
| TO_MINOR_LIMIT | 3000 | 10% |
| TO_MAJOR_LIMIT | 5000 | 30% |
| TO_CRITICAL_LIMIT | 10000 | 50% |

According to an embodiment, the management device 201 may obtain the third quality metric associated with the RTT data (e.g., an average RTT, or a maximum RTT). The management device 201 may check a lower threshold (e.g., 'RTT_MINOR_LIMIT'), a reference threshold (e.g., 'RTT_MAJOR_LIMIT'), and an upper threshold (e.g., 'RTT_CRITICAL_LIMIT') for the third quality metric. Each threshold may indicate a restriction of an average time of RTTs, which is a difference between a transmission time point of a request message and a reception time point of a response message. For example, the thresholds for the third quality metric may be configured as illustrated in a table below.

**[Table 4]**

| LEVEL | MEAN_TIME |
|---|---|
| RTT_MINOR_LIMIT | 3000 msec |
| RTT_MAJOR_LIMIT | 4000 msec |
| RTT_CRITICAl_LIMIT | 5000 msec |

Since the plurality of thresholds are set for each quality attribute, the management device 201 may determine a connection state of a specific NF as one of a plurality of levels. For example, the plurality of levels may include a first level for a case in which a quality metric (e.g., the first quality metric, the second quality metric, and the third quality metric) is lower than or equal to the lower threshold, a second level for a case in which the quality metric is greater than the lower threshold and lower than or equal to the reference threshold, a third level for a case in which the quality metric is greater than the reference threshold and lower than or equal to the upper threshold, and a fourth level for a case in which the quality metric is greater than the upper threshold.

The management device 201 may perform an action for the NF according to a level of the connection state of the NF. For example, in a case that the connection state of the NF is the first level, the management device 201 may determine that the connection state of the NF is normal. For example, in a case that the connection state of the NF is the second level, the third level, or the fourth level, the management device 201 may determine the NF as a fault NF. The action for the fault NF may include adjustment of distribution ratio information. In a case that the fault NF has the connection state of the second level, the management device 201 may adjust the distribution ratio information (e.g., MINOR_CAP A_REDUCE) of the fault NF having the connection state of the second level. As an example, the management device 201 may decrease an item of the fault NF by 10% from a pre-set distribution ratio. As the item of the fault NF is decreased, the distribution ratio may be recalculated. For example, the NF group may include two PCFs (e.g., a first PCF and a second PCF). In a case that a ratio set for the first PCF and the second PCF is 1: 1 and the first PCF has a fault, the management device 201 may decrease an item of the first PCF by 10%. A distribution ratio for the two PCFs may be recalculated as 0.9:1. In the same manner, in a case that the fault NF has the connection state of the third level, the management device 201 may adjust distribution ratio information (e.g., MAJOR_CAPA_REDUCE) of the fault NF having the connection state of the third level. As an example, the management device 201 may decrease the item of the fault NF by 30% from the pre-set distribution ratio. In a case that the fault NF has the connection state of the fourth level, the management device 201 may adjust the ratio information (e.g., CRITICAL_CAPA_REDUCE) of the fault NF. As an example, the management device 201 may decrease the item of the fault NF by 50% from the pre-set distribution ratio.

Meanwhile, as an action for the fault NF, in addition to adjustment of the distribution ratio information, setting of reject ratio information may be included. The management device 201 may reject new call requests using the fault NF according to the reject ratio information. For example, in a case that the fault NF has the connection state of the second level, the management device 201 may set reject ratio information (e.g., MINOR_REJ_REDUCE) of the fault NF having the connection state of the second level. As an example, the management device 201 may set the reject ratio information of the fault NF to 10%. For example, in a case that the fault NF has the connection state of the third level, the management device 201 may set reject ratio information (e.g., MAJOR_REJ_REDUCE) of the fault NF having the connection state of the third level. As an example, the management device 201 may set the reject ratio information of the fault NF to 30%. For example, in a case that the fault NF has the connection state of the fourth level, the management device 201 may set reject ratio information (e.g., CRITICAL_REJ_REDUCE) of the fault NF having the connection state of the fourth level. As an example, the management device 201 may set the reject ratio information of the fault NF to 50%.

For example, the following table may be referred to for the distribution ratio information and the reject ratio information.

**[Table 5]**

| LEVEL | RATIO |
|---|---|
| MINOR_CAPA_REDUCE | 10% |
| MAJOR_CAPA_REDUCE | 30% |
| CRITICAL_CAPA_REDUCE | 50% |
| MINOR_REJ_REDUCE | 10% |
| MAJOR_REJ_REDUCE | 30% |
| CRITICAL_REJ_REDUCE | 50% |

As an action for the fault NF, adjustment of the distribution ratio information or adjustment of the reject ratio information may be performed dependently rather than independently. Since rejecting is a more definite action for blocking a possibility of a connection to the fault NF than restricting distribution, the management device 201 may set a reject ratio instead of restricting a distribution ratio when a quality metric of a specific level (e.g., the fourth level) or higher is confirmed. For example, in a case that the fault NF has the connection state corresponding to the third level, the management device 201 may perform only an adjustment of lowering the distribution ratio to the fault NF. Thereafter, in a case that the fault NF has the connection state of the fourth level, the management device 201 may set the reject ratio information of the fault NF. The connection state corresponding to the fourth level may indicate that a current state of the fault NF is deteriorated. The management device 201 may reject a new call connection so that the new call connection for the fault NF is not generated for a predetermined time.

As another non-limiting embodiment, in a case that the connection state of the NF is the first level or the second level, the management device 201 may determine that the connection state of the NF is normal. In a case that the connection state of the NF is the third level or the fourth level, the management device 201 may determine the NF as a fault NF. The second level is a pre-fault stage, and the management device 201 may change a monitoring setting instead of restricting a connection of the corresponding NF. For example, in a case that the connection state of the NF is the second level, the management device 201 may increase a frequency of monitoring of the connection state of the NF. As an example, since the connection state of the NF may deteriorate, the management device 201 may set a period for collecting connection state information (e.g., connection failure data, timeout data, and RTT data) for the NF to be shorter. As an example, the management device 201 may set a period for performing an operation of determining a quality metric predicted in a specific period based on the collected data and an operation of comparing the quality metric with the threshold to be shorter.

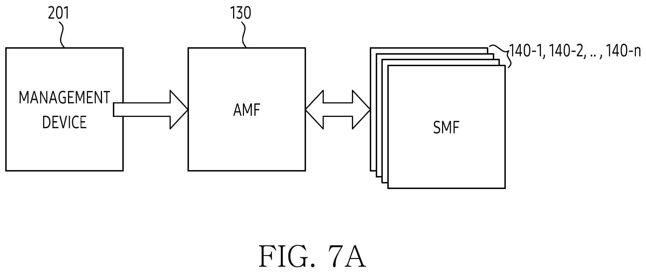

FIGS. 7A to 7D illustrate examples of NF selection. The NF selection may have various aspects according to a type of a management device 201, which is a subject of the NF selection, and types of NFs, which are targets of the NF selection.

Referring to FIG. 7A, the management device 201 may operate as an AMF 130 or may be linked with the AMF 130. The management device 201 may perform SMF selection. For example, the management device 201 may select an SMF. The management device 201 may identify, among a plurality of SMFs connected with the SMF 140, an SMF to be operated for the AMF 130. For the AMF 130, the management device 201 may identify an SMF, which is a network entity for managing user traffic during protocol data unit (PDU) session establishment, based on a data network name and a location (e.g., a location of a terminal 110). As an example, the management device 201 may collect data on a connection state of each SMF (e.g., SMF 140-1, SMF 140-2, ..., SMF 140-n) at each designated time (e.g., every 5 minutes), and may determine a connection state (hereinafter, a predicted connection state) predicted in each SMF. The management device 201 may detect an SMF for which occurrence of a fault is predicted (hereinafter, a fault SMF) based on the connection state of each SMF. The management device 201 may identify another SMF instead of the fault SMF as a session management service to be linked with the AMF 130.

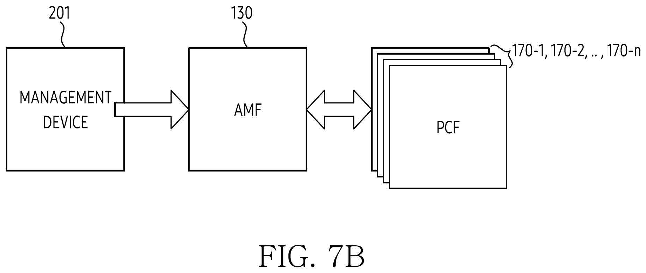

Referring to FIG. 7B, the management device 201 may operate as the AMF 130 or may be linked with the AMF 130. The management device 201 may perform PCF selection. For example, the management device 201 may select a PCF. The management device 201 may identify, among a plurality of PCFs connected with the SMF 140, a PCF to be operated for the AMF 130. As an example, the management device 201 may collect data on a connection state of each PCF (e.g., PCF 170-1, PCF 170-2, ..., PCF 170-n) at each designated time (e.g., every 5 minutes), and may determine a connection state (hereinafter, a predicted connection state) predicted in each PCF. The management device 201 may detect a PCF for which occurrence of a fault is predicted (hereinafter, a fault PCF) based on the connection state of each PCF. The management device 201 may identify another PCF instead of the fault PCF as a service for policy or charging to be operated in the AMF 130.

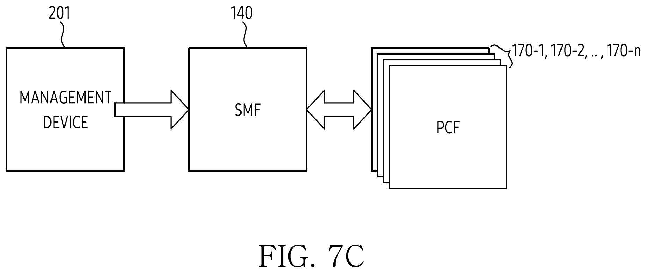

Referring to FIG. 7C, the management device 201 may operate as the SMF 140 or may be linked with the SMF 140. The management device 201 may perform PCF selection. For example, the management device 201, as the SMF 140, may select a PCF. The management device 201 may identify, among a plurality of PCFs connected with the SMF 140, a PCF to be operated for the SMF 140. As an example, the management device 201 may collect data on a connection state of each PCF (e.g., PCF 170-1, PCF 170-2, ..., PCF 170-n) at each designated time (e.g., every 5 minutes), and may determine a connection state (hereinafter, a predicted connection state) predicted in each PCF. The management device 201 may detect a PCF for which occurrence of a fault is predicted (hereinafter, a fault PCF) based on the predicted connection state of each PCF. The management device 201 may identify another PCF instead of the fault PCF as a service for policy or charging to be operated in the SMF 140.

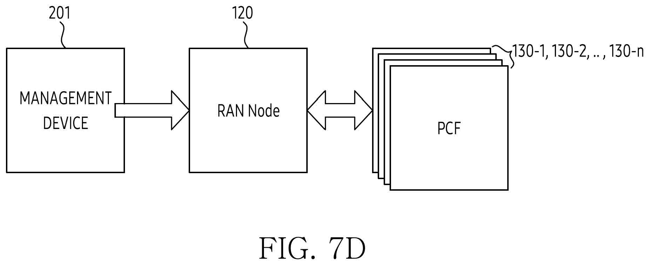

Referring to FIG. 7D, the management device 201 may be equipment connected with a base station 120 (e.g., the RAN node of FIG. 1B). The management device 201 may perform AMF selection through the base station 120. For example, the management device 201 may select an AMF to assist the base station 120. The management device 201 may identify, among a plurality of AMFs connected with the base station 120, an AMF to be operated for the base station 120. As an example, the management device 201 may collect data on a connection state of each AMF (e.g., AMF 130-1, AMF 130-2, ..., AMF 130-n) at each designated time (e.g., every 5 minutes), and may determine a connection state (hereinafter, a predicted connection state) predicted in each AMF. The management device 201 may detect an AMF for which occurrence of a fault is predicted (hereinafter, a fault AMF) based on the predicted connection state of each AMF. The management device 201 may identify another AMF instead of the fault AMF as a mobility and access management service for the base station 120.

In FIGS. 7A to 7D, the type of the management device 201, which is a subject of the NF selection, and types of the NFs, which are targets of the NF selection, have been exemplified, but embodiments of the present disclosure are not limited thereto. In addition to the examples illustrated through FIGS. 7A to 7D, other combinations may also be applied to the description of the NF selection according to the embodiments of the present disclosure. For example, the management device 201 may operate as the AMF 130, the SMF 140, or the PCF 170, and the NF selection may include selection of a charging function (CHF). For another example, the management device 201 may operate as the SMF 140, and the NF selection may include UPF selection.

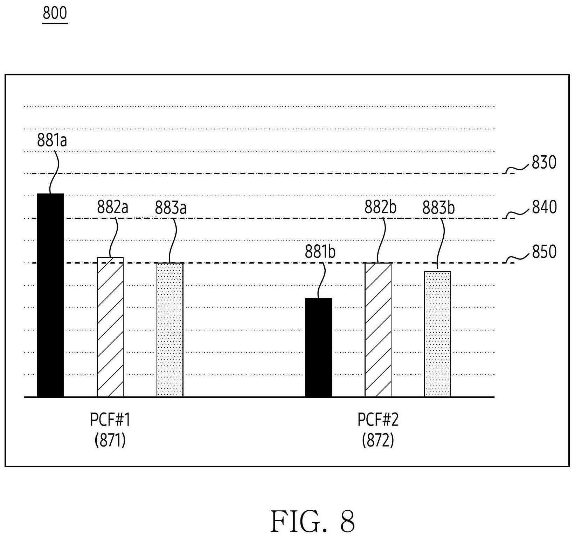

FIG. 8 illustrates an example of a quality metric for policy control function (PCF) selection. The PCF selection may be performed by an AMF (e.g., the AMF 130) or an SMF (e.g., the SMF 140).

Referring to FIG. 8, a graph 800 indicates quality metrics for each PCF. A management device 201 may be an NF operating as the AMF 130 or the SMF 140. The management device 201 may be connected with two PCFs. For example, the management device 201 may be connected with a first PCF 871 and a second PCF 872. The management device 201 may obtain a first quality metric 881a (e.g., a probability of a rejection message for a request message) for the first PCF 871, a second quality metric 882a (e.g., a probability of a timeout for a request message) for the first PCF 871, and a third quality metric 883a (e.g., an average RTT) for the first PCF 871. The management device 201 may obtain a first quality metric 881b (e.g., a probability of a rejection message for a request message) for the second PCF 872, a second quality metric 882b (e.g., a probability of a timeout for a request message) for the second PCF 872, and a third quality metric 883b (e.g., an average RTT) for the second PCF 872.

A horizontal axis of the graph 800 indicates quality metrics for each PCF, and a vertical axis of the graph 800 indicates a relative ratio of the quality metric for each threshold (e.g., a lower threshold 850, a reference threshold 840, and an upper threshold 830). The management device 201 may determine that the first quality metric 881a is greater than the reference threshold 840 and lower than or equal to the reference threshold 840. For example, the management device 201 may determine that a connection state associated with the first quality metric 881a is a third level. The management device 201 may determine that the second quality metric 882a is greater than the lower threshold 850 and lower than or equal to the reference threshold 840. For example, the management device 201 may determine that a connection state associated with the second quality metric 881b is a second level. According to an embodiment, in a case that a plurality of quality metrics being greater than the threshold are detected, the management device 201 may determine an action method for a corresponding NF based on a higher level. For example, the management device 201 may perform an action according to a third level corresponding to the first quality metric 881a. For example, the management device 201 may lower an item of the first PCF 871 by 30% in a distribution ratio for a new call. For example, the management device 201 may determine a reject ratio of the first PCF 871 as 30% for a request for a new call connection using the first PCF 371.

In FIG. 8, an example in which an action for a fault NF is performed based on a higher level in a situation of checking a connection state of the NF through a plurality of quality metrics has been described, but embodiments of the present disclosure are not limited thereto. According to an embodiment, the management device 201 may apply a weight to the quality metrics and may use a weighted sum of the quality metrics. The management device 201 may determine a level of the corresponding NF by comparing the weighted sum with each threshold (e.g., the lower threshold 850, the reference threshold 840, and the upper threshold 830). As a non-limiting example, the weight in the weighted sum may be applied in the same manner as a weight (e.g., a weight using cause information, a weight set higher for a timeout than for a rejection message) used in a data collection stage.

According to embodiments of the present disclosure, NF selection may be performed by detecting a fault NF and restricting a new connection for the fault NF, instead of a round-robin scheme in which distribution is performed at a fixed ratio according to a capability configured for each NF. By monitoring quality of each NF and by managing and leveling a degree of quality degradation, deterioration of service quality may be prevented in advance. Since rejection of a connection request, a timeout, and/or an RTT are quality attributes related to a connection delay or overload of a corresponding NF, a management device 201 may detect and predict an expected connection delay and/or overload. Before an actual problem occurs in a connected NF, by automatically detecting an NF for which occurrence of a fault is predicted and restricting a connection to the NF, a failure situation may be easily resolved without manual operator intervention. In addition, as an increase of a private network and a structure of a core network become more advanced, improvement of accuracy and reduction of operation cost may be achieved through automated network management.

The effects that can be obtained from the present disclosure are not limited to those described above, and any other effects not mentioned herein will be clearly understood by those having ordinary knowledge in the art to which the present disclosure belongs, from the following description.

In embodiments, a management device for network function (NF) selection is provided. The management device may comprise memory configured to store instructions, at least one transceiver; and at least one processor. The instructions, when executed by the at least one processor, may cause the management device to transmit a request message to each NF of a plurality of NFs connected to the management device, receive at least one response message from at least one NF of the plurality of NFs after transmitting the request message to each NF, obtain connection state information of each NF based on the request message transmitted to each NF and the at least one response message from the at least one NF, detect a fault NF among the plurality of NFs based on the connection state information, and perform an NF selection procedure by configuring a restriction for a new call connection using the fault NF.

According to an embodiment, the instructions, when executed by the at least one processor to perform the NF selection procedure, may cause the management device to determine whether a quality metric of the connection state information of each NF is greater than a reference threshold, and based on the determination, determine an NF having a quality metric being greater than the reference threshold as the fault NF among the plurality of NFs.

According to an embodiment, the instructions, when executed by the at least one processor to perform the NF selection procedure, may cause the management device to obtain distribution ratio information in which a distribution ratio to the fault NF is lowered from default distribution ratio information for the plurality of NFs, in a case that the quality metric of the fault NF is greater than reference threshold and is lower than or equal to an upper threshold, and perform the NF selection procedure based on the distribution ratio information.

According to an embodiment, the instructions, when executed by the at least one processor to perform the NF selection procedure, may cause the management device to set reject ratio information for the fault NF in a case that the quality metric of the fault NF is greater than upper threshold, and perform the NF selection procedure to reject a request of a call connection using the fault NF based on the reject ratio information for the fault NF.

According to an embodiment, the instructions, when executed by the at least one processor, may cause the management device to determine the rejection of the call connection using the fault NF, and based on the determination, transmit information on a back-off timer to a terminal providing the request of the call connection. The back-off timer may be used to prevent a request of a call connection while the back-off timer is operating.

According to an embodiment, the connection state information may comprise at least one of a first data set on a frequency of reception of rejection messages received in response to transmission of request messages to a corresponding NF, a second data set on a frequency of occurrence of timeouts for the request messages, and a third data set on round trip time (RTT) between the management device and the corresponding NF.

According to an embodiment, the instructions, when executed by the at least one processor to obtain the connection state information of each NF, may cause the management device to collect, for each NF among the plurality of NFs, data on the frequency of reception of the rejection messages in each designated period, to obtain the first data set. The instructions, when executed by the at least one processor, may cause the management device to collect, for each NF among the plurality of NFs, data on the frequency of occurrence of the timeouts for the request messages in each designated period, to obtain the second data set. The instructions, when executed by the at least one processor, may cause the management device to collect, for each NF among the plurality of NFs, data on the RTT between the management device and the corresponding NF in each designated period, to obtain the third data set.

According to an embodiment, the instructions, when executed by the at least one processor to detect the fault NF, may cause the management device to perform machine learning based on at least one of the first data set, the second data set, or the third data set, determine a quality metric of each NF of the plurality of NFs based on a result of the machine learning, and determine an NF having a quality metric being greater a designated threshold as the fault NF.

According to an embodiment, the instructions, when executed by the at least one processor to obtain the connection state information of each NF, may cause the management device to obtain cause information included in each rejection message of the rejection messages, and determine data corresponding to the frequency of reception of the rejection messages by applying a weight determined according to a type of the cause information. A weight of a case that the type of the cause information is related to call processing may be set to be greater than a weight of a case that the type of the cause information is not related to call processing.

According to an embodiment, the instructions, when executed by the at least one processor to obtain the connection state information of each NF, may cause the management device to determine the first data set corresponding to the frequency of reception of the rejection messages based on a first weight, and determine the second data set corresponding to the frequency of occurrence of the timeouts for the request messages based on a second weight.

According to an embodiment, the instructions, when executed by the at least one processor, may cause the management device to determine the plurality of NFs based on at least one of a packet data unit (PDU) session, a data network name, single-network slice selection assistance information (S-NSSAI) to identify a network slice, or location information of a terminal.

According to an embodiment, the management device may be associated with an access and mobility management function (AMF). The plurality of NFs may comprise session management functions (SMFs) or policy control functions (PCFs).

According to an embodiment, the management device may be associated with a network node providing an access network. The plurality of NFs may comprise access and mobility management functions (AMFs).

According to an embodiment, the management device may be associated with an access and mobility management function (AMF), a session management function (SMF), a short message service function (SMSF), or a policy control function (PCF). The plurality of NFs may comprise charging functions (CHFs).

In embodiments, a method performed by a management device for network function (NF) selection is provided. The method may comprise transmitting a request message to each NF of a plurality of NFs connected to the management device. The method may comprise receiving at least one response message from at least one NF of the plurality of NFs after transmitting the request message to each NF. The method may comprise obtaining connection state information of each NF based on the request message transmitted to each NF and the at least one response message from the at least one NF. The method may comprise detecting a fault NF among the plurality of NFs based on the connection state information. The method may comprise performing an NF selection procedure by configuring a restriction for a new call connection using the fault NF.

According to an embodiment, the performing the NF selection procedure may comprise determining whether a quality metric of the connection state information of each NF is greater than a reference threshold. The performing the NF selection procedure may comprise, based on the determination, determining an NF having a quality metric being greater than the reference threshold as the fault NF among the plurality of NFs.

According to an embodiment, the performing the NF selection procedure may comprise obtaining distribution ratio information in which a distribution ratio to the fault NF is lowered from default distribution ratio information for the plurality of NFs, in a case that the quality metric of the fault NF is greater than reference threshold and is lower than or equal to an upper threshold. The performing the NF selection procedure may comprise performing the NF selection procedure based on the distribution ratio information.

According to an embodiment, the performing the NF selection procedure may comprise setting reject ratio information for the fault NF in a case that the quality metric of the fault NF is greater than upper threshold. The performing the NF selection procedure may comprise performing the NF selection procedure to reject a request of a call connection using the fault NF based on the reject ratio information for the fault NF.

According to an embodiment, the method may comprise determining the rejection of the call connection using the fault NF. The method may comprise, based on the determination, transmitting information on a back-off timer to a terminal providing the request of the call connection. The back-off timer may be used to prevent a request of a call connection while the back-off timer is operating.

According to an embodiment, the connection state information may comprise at least one of a first data set on a frequency of reception of rejection messages received in response to transmission of request messages to a corresponding NF, a second data set on a frequency of occurrence of timeouts for the request messages, and a third data set on round trip time (RTT) between the management device and the corresponding NF.

In embodiments, a non-transitory computer-readable storage medium is provided. The non-transitory computer-readable storage medium may comprise memory configured to store instructions. The instructions, when executed by the at least one processor, may cause a management device to transmit a request message to each NF of a plurality of NFs connected to the management device, receive at least one response message from at least one NF of the plurality of NFs after transmitting the request message to each NF, obtain connection state information of each NF based on the request message transmitted to each NF and the at least one response message from the at least one NF, detect a fault NF among the plurality of NFs based on the connection state information, and perform an NF selection procedure by configuring a restriction for a new call connection using the fault NF.

For one or more embodiments, at least one of components described in one or more of the preceding drawings may be configured to perform one or more operations, techniques, processes, and/or methods as described in the present disclosure. For example, a processor (e.g., a baseband processor) described in the present disclosure related to one or more of the preceding drawings may be configured to operate according to one or more examples described in the present disclosure. For another example, circuitry associated with user equipment (UE), a base station, a network element, and the like, as described above related to one or more of the preceding drawings, may be configured to operate according to one or more examples described herein.

Any one of the embodiments described above may be combined with any other embodiment (or a combination of embodiments), unless explicitly stated otherwise. The foregoing description of one or more implementations provides illustration and explanation, but is not intended to limit the scope of the embodiments to the precise form disclosed or to be exhaustive. In view of the above teachings, modifications and variations are possible or may be obtained from practice of various embodiments.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A management device for network function (NF) selection, comprising:
memory configured to store instructions;
at least one transceiver; and
at least one processor,
wherein the instructions, when executed by the at least one processor, cause the management device to:
transmit a request message to each NF of a plurality of NFs connected to the management device,
receive at least one response message from at least one NF of the plurality of NFs after transmitting the request message to each NF,
obtain connection state information of each NF based on the request message transmitted to each NF and the at least one response message from the at least one NF; and
detect a fault NF among the plurality of NFs based on the connection state information; and
perform an NF selection procedure by configuring a restriction for a new call connection using the fault NF.

2. The management device of claim 1,
wherein the instructions, when executed by the at least one processor to perform the NF selection procedure, cause the management device to:
determine whether a quality metric of the connection state information of each NF is greater than a reference threshold; and
based on the determination, determine an NF having a quality metric being greater than the reference threshold as the fault NF among the plurality of NFs.

3. The management device of claim 2,
wherein the instructions, when executed by the at least one processor to perform the NF selection procedure, cause the management device to:
obtain distribution ratio information in which a distribution ratio to the fault NF is lowered from default distribution ratio information for the plurality of NFs, in a case that the quality metric of the fault NF is greater than reference threshold and is lower than or equal to an upper threshold, and
perform the NF selection procedure based on the distribution ratio information.

4. The management device of claim 3,
wherein the instructions, when executed by the at least one processor to perform the NF selection procedure, cause the management device to:
set reject ratio information for the fault NF in a case that the quality metric of the fault NF is greater than upper threshold; and
perform the NF selection procedure to reject a request of a call connection using the fault NF based on the reject ratio information for the fault NF.

5. The management device of claim 4,
wherein the instructions, when executed by the at least one processor, cause the management device to:
determine the rejection of the call connection using the fault NF, and
based on the determination, transmit information on a back-off timer to a terminal providing the request of the call connection, and
wherein the back-off timer is used to prevent a request of a call connection while the back-off timer is operating.

6. The management device of claim 1,
wherein the connection state information comprises at least one of a first data set on a frequency of reception of rejection messages received in response to transmission of request messages to a corresponding NF, a second data set on a frequency of occurrence of timeouts for the request messages, and a third data set on round trip time (RTT) between the management device and the corresponding NF.

7. The management device of claim 6, wherein the instructions, when executed by the at least one processor to obtain the connection state information of each NF, cause the management device to:
collect, for each NF among the plurality of NFs, data on the frequency of reception of the rejection messages in each designated period, to obtain the first data set,
collect, for each NF among the plurality of NFs, data on the frequency of occurrence of the timeouts for the request messages in each designated period, to obtain the second data set, and
collect, for each NF among the plurality of NFs, data on the RTT between the management device and the corresponding NF in each designated period, to obtain the third data set.

8. The management device of claim 6, wherein the instructions, when executed by the at least one processor to detect the fault NF, cause the management device to:
perform machine learning based on at least one of the first data set, the second data set, or the third data set;
determine a quality metric of each NF of the plurality of NFs based on a result of the machine learning; and
determine an NF having a quality metric being greater a designated threshold as the fault NF.

9. The management device of claim 6, wherein the instructions, when executed by the at least one processor to obtain the connection state information of each NF, cause the management device to:
obtain cause information included in each rejection message of the rejection messages; and
determine data corresponding to the frequency of reception of the rejection messages by applying a weight determined according to a type of the cause information,
wherein a weight of a case that the type of the cause information is related to call processing is configured to be greater than a weight of a case that the type of the cause information is not related to call processing.

10. The management device of claim 6, wherein the instructions, when executed by the at least one processor to obtain the connection state information of each NF, cause the management device to:
determine the first data set corresponding to the frequency of reception of the rejection messages based on a first weight, and
determine the second data set corresponding to the frequency of occurrence of the timeouts for the request messages based on a second weight.

11. The management device of claim 1, wherein the instructions, when executed by the at least one processor, cause the management device to:
determine the plurality of NFs based on at least one of a packet data unit (PDU) session, a data network name, single-network slice selection assistance information (S-NSSAI) to identify a network slice, or location information of a terminal.

12. The management device of claim 1,
wherein the management device is associated with an access and mobility management function (AMF), and
wherein the plurality of NFs comprises session management functions (SMFs) or policy control functions (PCFs).

13. The management device of claim 1,
wherein the management device is associated with a network node providing an access network, and
wherein the plurality of NFs comprises access and mobility management functions (AMFs).

14. The management device of claim 1,
wherein the management device is associated with an access and mobility management function (AMF), a session management function (SMF), a short message service function (SMSF), or a policy control function (PCF), and
wherein the plurality of NFs comprises charging functions (CHFs).

15. A method performed by a management device for network function (NF) selection, comprising:
transmitting a request message to each NF of a plurality of NFs connected to the management device,
receiving at least one response message from at least one NF of the plurality of NFs after transmitting the request message to each NF,
obtaining connection state information of each NF based on the request message transmitted to each NF and the at least one response message from the at least one NF; and
detecting a fault NF among the plurality of NFs based on the connection state information; and
performing an NF selection procedure by configuring a restriction for a new call connection using the fault NF.
